# EUROPEAN PATENT SPECIFICATION

(11) **EP 2 070 650 B1**
(45) Date of publication and mention of the grant of the patent: **02.09.2015**
(21) Application number: 08711302.3
(22) Date of filing: 14.02.2008
(51) Int. Cl.: B24B 3/26, B24B 3/02, B23C 5/10

(54) **GRINDING METHOD AND ROTARY CUTTING TOOL**
SCHLEIFVERFAHREN UND DREHSCHNEIDWERKZEUG
PROCÉDÉ DE RECTIFICATION ET OUTIL DE COUPE ROTATIF

(30) Priority: 23.04.2007 JP 2007113582
(43) Date of publication of application: 17.06.2009
(73) Proprietor: UNION TOOL CO., Tokyo 140-0013 (JP)
(72) Inventor: KOSHIO, Jun-Ichi, Tokyo 140-0013 (JP); TAKAHASHI, Shoichi, Tokyo 140-0013 (JP)
(74) Representative: Kramer Barske Schmidtchen Patentanwälte PartG mbB
(86) International application number: PCT/JP2008/052463
(87) International publication number: WO 2008/132860

(56) References cited:
- EP-A1- 0 683 002
- JP-A- 2005 028 566
- JP-A- 2006 263 870

## Description

### TECHNICAL FIELD

The present invention relates to a method for grinding and forming.

### BACKGROUND ART

A typical multiple-blade ball-end mill having three or more bottom blades, e.g., as disclosed in Patent Document 1, has a plurality of helically shaped swarf discharge flutes formed on the periphery of the tool body leading from the leading end of the tool toward the trailing end, and is provided with a bottom blade on each intersecting ridgeline of rake faces of the swarf discharge flutes and leading end flank faces of the tool body. A grindstone rotating at high speed is caused to come into contact with the leading end flank faces, and the path of movement of the rotating grindstone is transferred, whereby grinding and forming are performed.

Specifically, the rotating grindstone is caused to intersect, at a right angle, bottom blades provided to the intersecting ridgelines of the rake faces of the swarf discharge flutes and the leading end flank faces (a state in which the bottom blades and the axis of rotation of the grindstone are substantially parallel), and the main body of the tool and the grindstone are made to move in relation to each other, whereby grinding and forming are performed.

[Patent Document 1] Japanese Laid-open Patent Publication No. 2005-224898.

JP 2005-028566 A relates to a method of manufacturing a ball end mill, wherein the method is characterized in that the relief angle of the ball edge is changed from the ball edge of the ball end mill toward the shaft center part of the end mill, the relief angle near the shaft center part is set to be 5° or less, and the grinding machining of the relief angle of the ball edge is done by turning he grinding wheel around over the shaft center part.

EP 0 683 002 A1 discloses an example of a method as per the preamble of claim 1, wherein said method inter alia includes the steps that a first facet of an additional clearance face (32) is ground by rotating a cutter, and that a clearance face (34) is ground by rotating the cutter.

### DISCLOSURE OF THE INVENTION

### [Problems the Invention Is Intended to Solve]

However, for example, with ball-end mills having four or more blades, or three-blade ball-end mills having bottom blades disposed not at equivalent spacing but in non-equivalent spacing on the periphery of the tool body in order for the cutting resistance to be reduced, in a case in which the grindstone is caused to intersect a bottom blade at a right angle and a leading end flank face is ground and formed, the grindstone will come into contact with bottom blades other than the bottom blade associated with the one leading end flank face when the tool-center side of the one leading end flank face is ground and formed, and a problem will be presented in that the bottom blade will have reduced cutting action on the tool-center side.

The present invention resolves the abovementioned problem, and reduces roughness of the cut surface. The present invention provides a grinding and forming method as per claim 1, wherein, when the tool-center side of one leading end flank face is ground and formed by a grindstone, the direction of rotation of the grindstone is caused to intersect a bottom blade at an angle that is smaller than 90°, whereby not only does grinding of the other bottom blades not occur, but the roughness of the cut surface can be improved.

### [Effect of the Invention]

The present invention is configured as described above, and is therefore an exceptionally practical grinding and forming method, wherein, when the tool-center side of one leading end flank face is ground and formed by a grindstone, the direction of rotation of the grindstone is caused to intersect a bottom blade at an angle that is 30° or more, but smaller than 90°, whereby not only does grinding of the other bottom blades not occur, but the roughness of the cut surface can be improved.

### BRIEF DESCRIPTION OF THE DRAWINGS

FIG. 1 is a schematic front view of a four-blade ball-end mill obtained by the method according to the present embodiment;
FIG. 2 is a schematic perspective view of a principal part of a four-blade ball-end mill obtained by the method according to the present embodiment;
FIG. 3 is a schematic plan view illustrating the relationship between a grindstone and bottom blade (intersecting in parallel);
FIG. 4 is a schematic side view of the shape of a flank face formed by the intersection relationship shown in FIG. 3;
FIG. 5 is a schematic plan view illustrating the relationship between a grindstone and bottom blade (intersecting at a right angle);
FIG. 6 is a schematic side view of the shape of a flank face formed by the intersection relationship shown in FIG. 5; and
FIG. 7 is a schematic plan view illustrating the relationship between an intersecting grindstone of the present embodiment and a bottom blade.

### BEST MODE FOR CARRYING OUT THE INVENTION

Preferred embodiments of the present invention are briefly described below with reference to the drawings while indicating the action of the present invention.

When the tool-center side of one leading end flank face 4 of a rotary cutting tool having three or more blades is ground and formed over a predetermined range, a main body 1 of the tool and a grindstone 6 are made to move in relation to each other, and grinding is performed by the grindstone 6. The direction in which the grindstone 6 rotates is set at an intersecting angle α that is 30° or more, but smaller than 90° with respect to one bottom blade 5 associated with the one leading end flank face 4 (a state in which the rotational axis of the grindstone 6 is set at an incline with respect to the bottom blade 5 and is not parallel to the one bottom blade 5). The direction is set so that the grindstone 6 will not interfere with any of the bottom blades 5 other than the one bottom blade 5. The grindstone 6 is thereby able to grind and form the leading end flank face 4 on the tool-center side while being kept clear from the other bottom blades 5. It is accordingly possible to have interference with the other bottom blades 5 occur only in the vicinity of the center of the tool when the one leading end flank face 4 is to be ground and formed (interference is unavoidable in the vicinity of the center of the tool).

The grindstone 6 is caused to intersect with the tool-center side of the leading end flank face 4 and grinding and forming are performed in a state in which the rotational direction of the grindstone 6 is not at a right angle with respect to the bottom blades 5, but is set at a predetermined angle of incline. Therefore, roughness of the surface of work that has been cut using the tool can be reduced. Specifically, even if the grinding surface roughness of the leading end flank faces is the same, the roughness of the cut surface of the work is reduced. This result occurs because the shape of the path of rotation of the most prominent part in the vicinity of the tool center is transferred to the finished surface of the cut work, and the work also returns to the original shape while being machined. Therefore, reducing the grinding direction to 30° or more, but less than 90° allows the flank face and the machined surface to rub together, and the finished surface to be improved.

### [Embodiments]

Specific embodiments of the present invention are described below with reference to the drawings.

The present embodiment is a method for grinding and forming a leading end flank face 4 wherein a grindstone 6 is used on a leading end surface of a tool body 1 of a ball end-mill having three or more blades, and the leading end flank faces 4 are ground and formed. Multiple helically shaped swarf discharge flutes 2 are formed around the periphery of a tool body 1 from a leading end of the tool toward a trailing end. A bottom blade 5 is provided on each intersecting ridgeline formed between rake faces 3 of the swarf discharge flutes 2 and leading end flank faces 4 of the tool body 1. When the tool-center side of one leading end flank face 4 is to be ground and formed over a predetermined range, the tool body 1 and the grindstone 6 are made to move in relation to each other. Grinding and forming are performed in a state in which a rotational direction A of the grindstone 6 is set to intersect at an angle α that is 30° or more, but smaller than 90° with respect to the one bottom blade 5 with no interference caused to any of the bottom blades 5 other than the one bottom blade 5 formed from the one leading end flank face 4 ground and formed by the rotating grindstone 6.

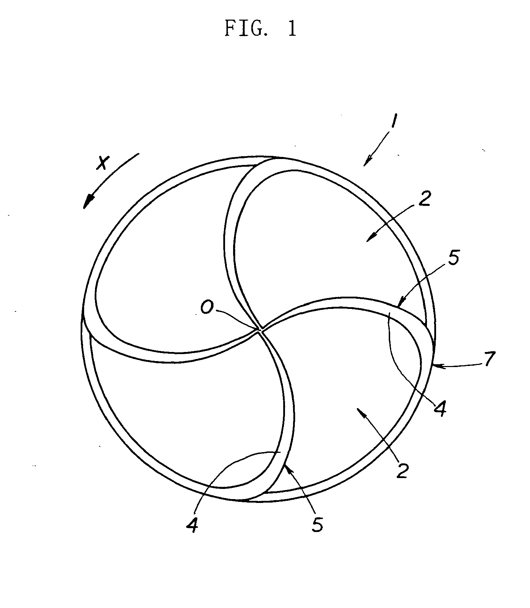

Specifically, as shown in FIG. 1, a case is illustrated in which a grindstone 6 (generally a diamond grinding wheel) is used, and a leading end flank face 4 of a four blade ball-end mill made from a superhard alloy is ground and formed. Four helically shaped swarf discharge flutes 2 are formed around the periphery of the tool body 1, leading from the leading end of the tool towards the trailing end. A peripheral blade 7 is formed on the intersecting ridgelines of the rake faces 3 of the swarf discharge flutes 2 and the peripheral surface of the tool body 1. A quarter-circle arc-shaped bottom blade 5 (ball blade) is provided on each intersecting ridgeline of the rake faces 3 of the swarf discharge flutes 2 and the leading end flank faces 4 of the tool body 1. The letter 'X' in the drawing shows the direction in which the tool rotates. The present invention is not limited to the manufacturing of a four-blade ball-end mill, and is likewise applied to a ball-end mill having three blades or five blades or more.

In the present embodiment, after the swarf discharge flutes 2 (and gashes) are formed in the tool body 1, the leading end flank faces 4 are formed, and the peripheral blade 7 is formed.

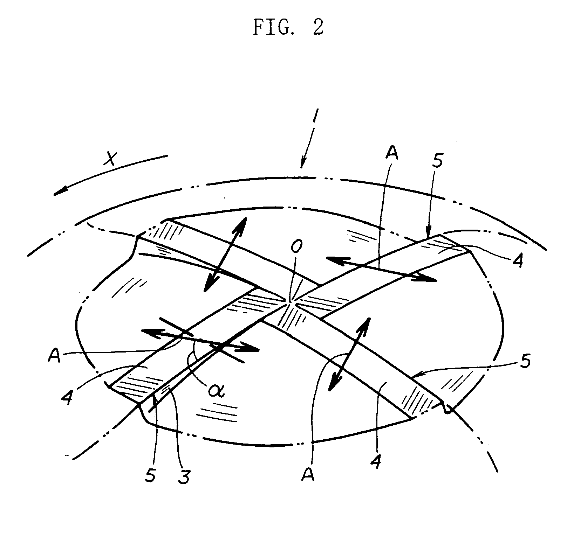

In the present embodiment, as shown in FIG. 2, one leading end flank face 4 is ground and formed over at least a region that extends from the tool center O by 0**.**5% or less of an outside diameter of the tool (the diameter of the rotational path of the peripheral blade), as a result of the grindstone 6 being caused to move along the extending direction of one bottom blade 5, in a state in which the rotational direction A of the grindstone 6 is caused to intersect the one bottom blade 5 at an intersecting angle α of 300 ° to 65 ° in relation thereto. The direction is set so that the grindstone 6 will not interfere with any of the bottom blades 5 besides the one bottom blade 5 formed from the one leading end flank face 4 (the bottom blades 5 on the trailing side of the leading end flank face 4 in the direction of tool rotation).

The present inventors experimentally confirmed that when the intersecting angle α was less than 30°, the bottom blades 5 had inadequate backup and strength; therefore, microscopic chipping tended to occur. They also confirmed that when the intersecting angle α was 65° or larger, the action of improving the roughness of the cut surface, which is due to a decrease in the grindstone surface roughness transferred to the tool-center side of the leading end flank face 4, had declined.

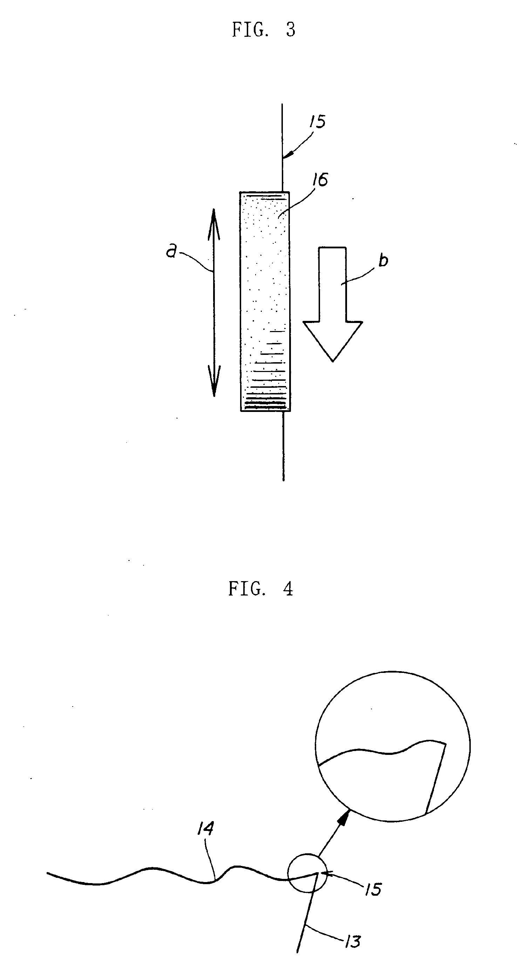

Specifically, as shown in FIGS. 3 and 4, a microscopic examination of the vicinity of the cutting blade shows that the amount of backup of the bottom blade 15 is inadequate and nicks readily form in the blade because as the intersecting angle α gets closer to 0°, the grinding direction approaches a state of being parallel to a bottom blade 15. In particular, the roughness of the cut surface caused by nicks in the blade was confirmed to be significantly worse when the angle was less than 30°. It was also confirmed that the flatness of the grindstone was increasingly transferred to the leading end flank faces 14 when the intersecting angle α was closer to 0°. Therefore, when the shape of the grindstone is compromised due to warping, bluntness, or the like, the predetermined target flank angle cannot be stably formed (see the enlarged portion of FIG. 4), and drawbacks arise in that the predetermined clearance and the desired rigidity of the bottom blades cannot be ensured. The letters a and b in the drawing respectively indicate the direction in which the grindstone 16 is rotating and the direction in which the grindstone 16 is moving, and the number 13 indicates a rake face.

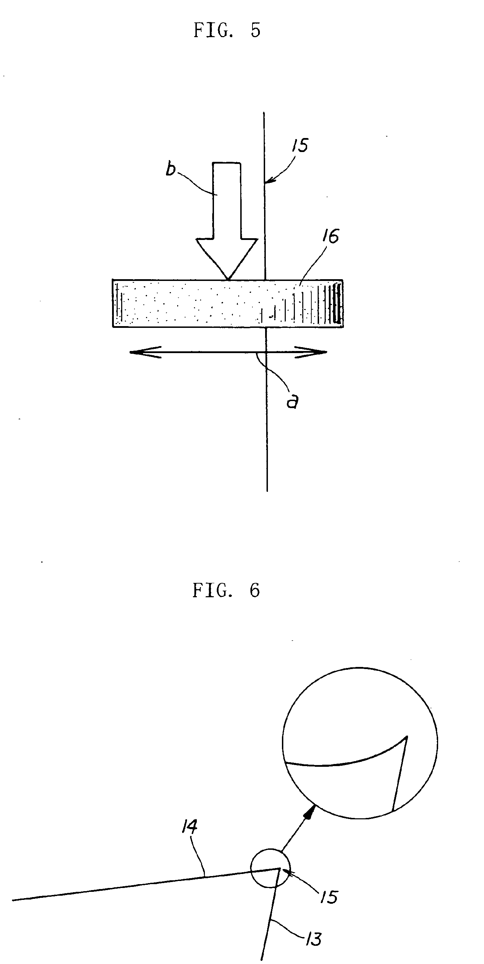

As shown in FIGS. 5 and 6, when the intersecting angle α is 90°, an "R" shape from the rotating grindstone 16 is transferred along the extending direction of one bottom blade 15, and grinding is performed by the part of the grindstone 16 protruding the furthest. Advantages are accordingly presented in that there will be no effect from warping, bluntness, or other attributes of the shape of the grindstone, and the leading end flank face 14 will have a stable concave shape (see the enlarged portion of FIG. 6); however, the machined surface when cutting had been done was confirmed to have a high degree of roughness.

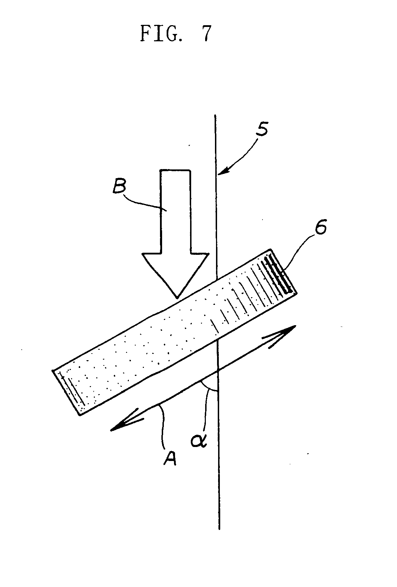

In this regard, and as shown in FIG. 7, when the intersecting angle α is set to be greater than 0° and less than 90°, the grinding surface roughness of the leading end flank faces will be the same, but the roughness of the cut surface of the work is reduced. This result occurs because the shape of the path of rotation of the most prominent part in the vicinity of the tool center is transferred to the finished surface of the cut work, and the work also returns to the original shape while being machined. Therefore, reducing the grinding direction to less than 90° allows the flank face and the machined surface to rub together, and the finished surface to be improved. Specifically, it was confirmed that the roughness of the cut surface was greatly reduced in the range of 30° to 45°, and noticeable improvement occurred particularly in the vicinity of 30°.

In view of the above, the intersecting angle α is set between 30° and 65° (preferably 30° to 45°) in the present embodiment.

In the present embodiment, at least a region that extends from a tool center O by 0.5% or less of an outside diameter of the tool(tool center region) is ground with the intersecting angle α being set to less than 90°, and the remaining region (tool periphery region) is ground with the intersecting angle set to 90°. For the region that is beyond what is indicated above, the intersecting angle α may be smaller than 90°; however, in flat finish working, which is the most common, this is a region that does not perform a cutting action, therefore no effect is demonstrated.

When the tool-center region is to be ground, the grinding is performed while the angle at which the grindstone 6 is inclined is caused to change so that the intersecting angle α decreases closer to the tool center. In the present embodiment, the angle of incline of the grindstone 6 is set so that the intersecting angle α is 45° closest to the tool center, gradually increases from the tool center O to a position of 5% of the outside diameter of the tool, and, further outward from the center, reaches 90°.

Specifically, in the present embodiment, the intersecting angle α is 45° at the tool center, and changes in a gradually increasing direction while the grindstone 6 is moved from the tool center O to the position of 5% of the outside diameter of the tool until the angle reaches 90°. The leading end flank face 4 is formed while the intersecting angle α is kept at 90° on the tool periphery.

Accordingly, when the present embodiment is supplied for finishing using hardened steel or another difficult-to-cut material having high hardness, the fact that the intersecting angle α decreases closer to the leading end and reaches 45° at the tipmost part makes it possible to obtain a cut surface roughness of exceptionally high precision, and a ball-end mill having a surface roughness of long-lasting quality can be obtained.

In the present embodiment, when the tool-center region is to be ground as described above, the grinding is performed while the intersecting angle α is gradually changed. However, grinding may also be performed at a fixed intersecting angle α.

In the present embodiment, moreover, grinding is performed while the tool body 1 is caused to move; however, grinding may also be performed while the grindstone 6 is caused to move, or while both are caused to move.

The present embodiment describes a ball-end mill; however, it is possible for the above method to be used to work a leading end flank face of a square-end mill or radius-end mill, in which case substantially the same basic effects can be obtained.

According to the present embodiment, as described above, when the tool-center side of one leading end flank face 4 of a ball-end mill having three or more blades is ground over a predetermined range, a main body 1 of the tool and a grindstone 6 are made to move in relation to each other, and the grindstone 6 grinds and forms in a state in which the grindstone 6 is caused to intersect one bottom blade 5 at 30° to 65° in a manner so that the grindstone 6 will not interfere with any bottom blades 5 other than the one bottom blade 5 formed from the one leading end flank face 4. The grindstone 6 is thereby able to grind and form the leading end flank face 4 on the tool-center side while being kept clear from the bottom blades 5 other than the one bottom blade 5 formed from the one leading end flank face 4 to be ground. It is accordingly possible to have interference with the other bottom blades 5 occur only in the vicinity of the leading end (the tool center) when the one leading end flank face 4 is ground.

The rotational direction of the grindstone 6 is caused to intersect the tool-center side of the leading end flank face 4 of a ball-end mill used to finish a machined surface in a state of being at a predetermined angle of incline, and not at a right angle, with respect to a bottom blade 5. The tool body 1 and the grindstone 6 are made to move in relation to each other and grinding is performed, whereby roughness of the cut surface can be reduced.

Therefore, the present embodiment is exceptionally practical, and when one leading end flank face is ground and formed, not only does grinding of the bottom blades other than the one bottom blade formed from the one leading end flank face not occur, but the roughness of the cut surface can be improved.

## Claims

1. A method for grinding and forming a leading end flank face (4) wherein a grindstone (6) is used and a leading end flank face (4) is ground and formed on a leading end surface of a tool body (1) of a rotary cutting tool having three or more blades, several helically shaped swarf discharge flutes (2) being formed on a periphery of the tool body (1) from a leading end of the tool toward a trailing end, and a bottom blade (5) being provided on each intersecting ridgeline of leading end flank faces (4) of the tool body (1) and rake faces (3) of the swarf discharge flutes (2); when a tool-center side of one of the leading end flank faces (4) is ground and formed over a predetermined range, grinding is performed by the grindstone (6) with no interference occurring with any of the bottom blades (5) other than the one bottom blade (5), **characterized in that** a direction (A) in which the grindstone (6) rotates is set at an intersecting angle (α) of 30° or more, but less than 90° with respect to one of the bottom blades (5) associated with the one leading end flank face (4) to be ground and formed,

2. The grinding and forming method according to claim 1, wherein the grinding and forming method is **characterized in that** the intersecting angle (α) is set to be 30° to 65°.

3. The grinding and forming method according to claim 2, wherein the grinding and forming method is **characterized in that** the one leading end flank face (4) is ground and formed at said intersecting angle (α) over at least a region that extends from a tool center (0) by 0.5% or less of an outside diameter of the tool.

4. The grinding and forming method according to claim 3, wherein the grinding and forming method is **characterized in that** when grinding is performed, the intersecting angle (α) is caused to change so as to decrease closer to the tool center.

## Patentansprüche

1. Verfahren zum Schleifen und Formen einer Flankenfläche eines vorderen Endes (4), bei dem eine Schleifscheibe (6) verwendet wird und eine Flankenfläche eines vorderen Endes (4) an einer Oberfläche eines vorderen Endes eines Werkzeugkörpers (1) eines rotierenden Schneidwerkzeugs mit drei oder mehr Schneiden geschliffen und geformt wird, wobei mehrere helikal geformte Spanabführungsnuten (2) an einem Umfang des Werkzeugkörpers (1) von einem vorderen Ende des Werkzeugs zu einem hinteren Ende ausgebildet sind, und eine untere Schneide (5) an jeder sich schneidenden Gratlinie von Flankenflächen des vorderen Endes (4) des Werkzeugkörpers (1) und Spanflächen (3) der Spanabführungsnuten (2) bereitgestellt ist, wobei beim Schleifen und Formen einer Seite der Werkzeugmitte von einer der Flankenflächen eines vorderen Endes (4) über einem vorgegebenen Bereich das Schleifen durch die Schleifscheibe (6) ohne Kontakt mit irgendeiner der unteren Schneiden (5), die von der einen unteren Schneide (5) verschieden ist, durchgeführt wird, **dadurch gekennzeichnet, dass** die Richtung (A), in der sich die Schleifscheibe (6) dreht, auf einen Schnittwinkel (α) von 30° oder mehr, jedoch weniger als 90° in Bezug auf eine der unteren Schneiden (5) eingestellt wird, die zu der zu schleifenden und zu formenden einen Flankenfläche eines vorderen Endes (4) gehört.

2. Verfahren zum Schleifen und Formen nach Anspruch 1, wobei das Verfahren zum Schleifen und Formen **dadurch gekennzeichnet ist, dass** der Schnittwinkel (α) auf 30° bis 65° eingestellt wird.

3. Verfahren zum Schleifen und Formen nach Anspruch 2, wobei das Verfahren zum Schleifen und Formen **dadurch gekennzeichnet ist, dass** die eine Flankenfläche eines vorderen Endes (4) bei dem Schnittwinkel (α) über mindestens einen Bereich geschliffen und geformt wird, der sich von der Werkzeugmitte (0) um 0,5 % oder weniger eines Außendurchmessers des Werkzeugs erstreckt.

4. Verfahren zum Schleifen und Formen nach Anspruch 3, wobei das Verfahren zum Schleifen und Formen **dadurch gekennzeichnet ist, dass** dann, wenn das Schleifen durchgeführt wird, bewirkt wird, dass sich der Schnittwinkel (α) derart ändert, dass er näher zu der Werkzeugmitte hin abnimmt.

## Revendications

1. Procédé de rectification et de formage d'une face de flanc d'extrémité avant (4), dans lequel une meule (6) est utilisée et une face de flanc d'extrémité avant (4) est rectifiée et formée sur une surface d'extrémité avant d'un corps d'outil (1) d'un outil de coupe rotatif présentant trois ou plusieurs lames, plusieurs gorges d'évacuation de copeaux formées en hélice (2) étant formées sur une périphérie du corps d'outil (1) d'une extrémité avant de l'outil vers une extrémité arrière, et une lame inférieure (5) étant prévue sur chaque ligne de crête d'intersection des faces de flanc d'extrémité avant (4) du corps d'outil (1) et des faces de dépouille (3) des gorges d'évacuation de copeaux (2) ;
lorsqu'un côté de centre d'outil de l'une des faces de flanc d'extrémité avant (4) est rectifié et formé sur une plage prédéterminée, la rectification est réalisée par la meule (6) sans apparition d'interférence avec l'une quelconque des lames inférieures (5) autres que la lame inférieure (5), **caractérisé en ce qu'**une direction (A), dans laquelle la meule (6) tourne, est définie selon un angle d'intersection (α) de 30° ou plus, mais moins de 90° par rapport à l'une des lames inférieures (5) associées avec l'une face de flanc d'extrémité avant (4) à rectifier et à former.

2. Procédé de rectification et de formage selon la revendication 1, dans lequel le procédé de rectification et de formage est **caractérisé en ce que** l'angle d'intersection (α) est défini pour être compris entre 30° et 65°.

3. Procédé de rectification et de formage selon la revendication 2, dans lequel le procédé de rectification et de formage est **caractérisé en ce que** l'une face de flanc d'extrémité avant (4) est rectifiée et formée selon ledit angle d'intersection (α) sur au moins une région qui s'étend d'un centre d'outil (0) de 0,5 % ou moins d'un diamètre extérieur de l'outil.

4. Procédé de rectification et de formage selon la revendication 3, dans lequel le procédé de rectification et de formage est **caractérisé en ce que** lorsque la rectification est réalisée, l'angle d'intersection (α) est amené à changer de sorte à diminuer plus près du centre d'outil.
